**Europäisches Patentamt**

**European Patent Office**

**Office européen des brevets**

(19)

(11) Veröffentlichungsnummer: **0 019 160**
**B1**

(12) # EUROPÄISCHE PATENTSCHRIFT

(45) Veröffentlichungstag der Patentschrift:
25.11.81

(51) Int. Cl.³: **B 01 D 53/34**, B 01 D 53/02

(21) Anmeldenummer: **80102380.5**

(22) Anmeldetag: **02.05.80**

(54) Verfahren zur Vernichtung von Phosgen.

(30) Priorität: **16.05.79 DE 2919661**

(43) Veröffentlichungstag der Anmeldung:
**26.11.80 Patentblatt 80/24**

(45) Bekanntmachung des Hinweises auf die Patenterteilung:
**25.11.81 Patentblatt 81/47**

(84) Benannte Vertragsstaaten:
**CH DE FR GB LI**

(56) Entgegenhaltungen:
**DE-A-1 667 438**
**DE-A-1 942 519**
**DE-A-2 344 217**
**DE-A-2 406 813**
**DE-A-2 804 742**
**DE-C-961 681**
**FR-A-1 478 891**
**GB-A-2 001 616**
**»Gmelin Handbuch der Anorganischen**
**Chemie« 8. Auflage,**
**System-Nummer 14, 1976, Seite 94.**
**»Ullmanns Encyklopädie der technischen**
**Chemie« 4. Auflage, Band 2, 1972, Seite 602.**

(73) Patentinhaber: **BASF Aktiengesellschaft,**
**Carl-Bosch-Strasse 38, D-6700 Ludwigshafen (DE)**

(72) Erfinder: **Duembgen, Gerd, Dr., Sudetenstrasse 4,**
**D-6701 Dannstadt-Schauernheim 1 (DE)**
Erfinder: **Voelkl, Erfried, Dr., Pierstrasse 10c,**
**D-6710 Frankenthal (DE)**
Erfinder: **Pforr, Gerhard, Dr., Budapester Strasse 26,**
**D-6700 Ludwigshafen (DE)**

Verfahren zur Vernichtung von Phosgen

Vorliegende Erfindung betrifft ein Verfahren zur Entfernung und Vernichtung von Phosgen in phosgenhaltigen Abgasen.

Phosgen, das häufig in Abgasen vorkommt, ist bekanntlich hochgiftig und darf daher nicht emittiert werden. Zu diesem Zweck muß es quantitativ vernichtet bzw. zu solchen Reaktionsprodukten umgesetzt werden, die weniger schädlich sind und in einfacher Weise absolut zuverlässig aus dem Abgas entfernt werden können. Die Vernichtung des Phosgens sollte nach Möglichkeit so erfolgen, daß Wertprodukte im Abgas, z. B. Chlor, nicht verloren gehen und wieder verwendet werden können.

Für die Vernichtung und Entfernung von Phosgen aus Abgasen ist schon eine Reihe von Verfahren bekannt geworden. So kann man das Phosgen aus den Abgasen z. B. durch Waschen mit Wasser oder besser mit Laugen entfernen. Bekannt sind auch Verfahren, das Phosgen durch Hydrolyse in Gegenwart von katalytisch wirkenden Stoffen zu zerlegen.

Aus der DE-B-1 667 438 ist ein Verfahren bekannt, wonach man eine gasförmige Mischung, die Phosgen und Wasserdampf enthält, bei Temperaturen von 95 bis 190° C mit alkaliaktivierter Tonerde in Berührung bringt. Das Verfahren benötigt relativ hohe Temperaturen und ist wegen der großen Energiemengen, die zur Aufheizung der meist kälteren Abgase erforderlich sind, unwirtschaftlich.

Auch Aktivkohle bzw. aktive Kohle sind als Katalysatoren für die katalytische Spaltung von Phosgen bekannt geworden. Gemäß der DE-C-961 681 wird das Phosgen in innige Berührung mit Aktivkohle und Wasser gebracht. Gemäß der DE-A-2 131 403 wird anstelle des Wassers eine saure, wässerige Eisen(II)-chlorid enthaltende Lösung eingesetzt.

Alle bisher bekannten Verfahren zur Vernichtung von Phosgen weisen jedoch Nachteile auf, die ihre Anwendbarkeit beschränken. Die hydrolytische Spaltung des Phosgens in einer Wasserwäsche verläuft z. B. nur dann quantitativ, wenn die Verweilzeit des Phosgens genügend groß ist. Dies ist nur durch Reihenschaltung mehrerer, sehr großer Waschkolonnen realisierbar; damit verbunden steigen die Investitions- und Betriebskosten beträchtlich. Auch bei den Verfahren, die mit mit Flüssigkeiten berieselter Aktivkohle arbeiten, sind lange Verweilzeiten erforderlich.

Hierbei ist zu bemerken, daß die Verweilzeiten mit fallender Konzentration des Phosgens zur Entfernung einer bestimmten Phosgenmenge stark ansteigen, so daß gerade für die Entfernung geringer Phosgenmengen unverhältnismäßig große Apparatevolumina vorgesehen werden müssen.

Darüber hinaus haben sie den weiteren Nachteil, daß ihre Leistung, verursacht durch Feststoff-Verunreinigungen in den Flüssigkeiten, mit zunehmender Betriebszeit abnimmt. Die Feststoff-Partikel werden bevorzugt an den Kohlekörnern abgelagert, was zu Verstopfungen führt. Dieser weitere Nachteil könnte durch eine zusätzlich durchgeführte Reinigung der im Kreis geführten Flüssigkeiten vermieden werden, was jedoch andererseits den Aufwand wieder erheblich steigert.

Ein weiterer Nachteil dieser Verfahren besteht darin, daß die Aktivkohle möglichst gleichmäßig mit der Flüssigkeit berieselt werden muß, d. h. daß es z. B. bei größeren Aggregaten zweckmäßig ist, die Aktivkohleschicht in dem Turm zu unterteilen und jeder Schicht gesondert Wasser zuzuführen, oder aber in mehreren Türmen zu arbeiten (vgl. DE-C-961 681).

Bei Laugenwäschen ist zwar zu einer vollständigen Vernichtung des Phosgens die Verweilzeit klein; da jedoch bei der Reaktion Kohlendioxid entsteht, das sich mit der Lauge umsetzt, muß diese ständig ergänzt werden, so daß auch aus diesem Grunde mit erheblichen Betriebskosten zu rechnen ist, ganz abgesehen davon, daß dieses Verfahren bei Abgasen, die zusätzlich Kohlendioxid enthalten, überhaupt nicht oder nur sehr beschränkt verwendbar ist.

Die Wäsche mit Laugen kommt daher nur bei den Abgasen in Betracht, die keine weiteren Bestandteile außer Phosgen enthalten, die sich mit den Laugen umsetzen, um somit den Laugenverbrauch nicht in wirtschaftlich untragbarer Weise zu steigern.

Der vorliegenden Erfindung lag die Aufgabe zugrunde, ein Verfahren bereitzustellen, durch das die Nachteile der bekannten Verfahren eliminiert werden, d. h. die Vernichtung des Phosgens bei kurzen Verweilzeiten und entsprechend kleinen Apparaturen bei niederen Temperaturen ohne Anwendung besonders aktivierter Katalysatoren durchführen zu können.

Es wurde gefunden, daß man diese Aufgabe bei einem Verfahren zur Vernichtung von in Gasen enthaltenem Phosgen durch Hydrolyse des Phosgens in Gegenwart von Aktivkohle dadurch lösen kann, daß man die Hydrolyse des Phosgens in Abwesenheit von flüssigem Wasser mit dampfförmigem Wasser oberhalb des Taupunktes des Wassers durchführt.

Überraschenderweise gelingt es mit der erfindungsgemäßen Arbeitsweise mit wesentlich kleineren Aktivkohleschüttungen auszukommen, als sie bei den bekannten Verfahren, bei denen die Hydrolyse mit flüssigem Wasser durchgeführt wird, erforderlich sind. Nach dem erfindungsgemäßen Verfahren lassen sich aus Abgasen Phosgenmengen kleinster Konzentrationen aus z. B. Abgasen entfernen bis hin zu Konzentrationen, die dem Sättigungsgehalt des Gases an Wasserdampf bei der jeweiligen Temperatur entsprechen. Die Hydrolyse des Phosgens wird durch andere Bestandteile des Gases praktisch nicht beeinträchtigt.

Phosgen und Wasserdampf werden vermutlich in den Poren der Aktivkohle absorbiert und es wird das Phosgen in diesem Zustand hydrolysiert. Auf diese Tatsache dürfte auch zurückzuführen sein, daß die Hydrolyse mit relativ geringen Volumina an Aktivkohlen durchgeführt werden kann.

Wesentlich ist, daß die Hydrolyse in Abwesenheit von flüssigem Wasser vorgenommen wird, da sonst die Vernichtungsleistung einer gegebenen Schüttung zumindest stark beeinträchtigt wird, wenn sie nicht sogar ganz zusammenbricht. Aus diesem Grunde ist einerseits eine Berieselung der Aktivkohle mit Wasser zu vermeiden, andererseits ist darauf zu achten, daß eine Kondensation von Wasserdampf in der Aktivkohleschüttung vermieden wird.

Ein wesentlicher Vorteil des erfindungsgemäßen Verfahrens besteht darin, daß es gelingt, schon bei Raumtemperatur eine quantitative Hydrolyse des Phosgens zu erreichen. Aus diesem Grunde können die phosgenhaltigen Abgase ohne vorherige Aufheizung direkt der erfindungsgemäßen Behandlung unterzogen werden. Bei erhöhten Temperaturen wird allerdings die Vernichtungsleistung einer gegebenen Aktivkohleschüttung gesteigert, d. h. eine gegebene Phosgenkonzentration kann bei erhöhten Temperaturen mit einer kleineren Menge an Aktivkohle wirksam vernichtet werden. Da die Hydrolyse des Phosgens exotherm verläuft, ist es zweckmäßig, die Aktivkohleschüttung beispielsweise in einer isolierten Kolonne anzuordnen, so daß das Bett durch die bei der Reaktion entwickelten Wärme auf erhöhten Temperaturen ohne äußere Wärmezufuhr gehalten wird. Die Hydrolyse läßt sich daher zweckmäßig bei Temperaturen von 10 bis 80°C, besonders vorteilhaft bei Temperaturen von 30 bis 60°C durchführen. Für die Einführung des Wasserdampfes bestehen verschiedene Möglichkeiten. Besonders zweckmäßig ist es, den Wasserdampf zusammen mit dem zu behandelnden Gas einzubringen. Zu diesem Zweck sättigt man das Gas in bekannter Weise vor Eintritt in die Aktivkohleschüttung mit Wasserdampf auf und läßt es zweckmäßig einen Tropfenabscheider passieren, um das Einbringen von flüssigem Wasser in die Aktivkohleschicht mit Sicherheit zu vermeiden. Durch die bei der Reaktion frei werdende Wärme wird die Schicht, insbesondere bei Anordnung in wärmeisolierten Reaktoren, gegenüber dem Eingangsgas auf einer erhöhten Temperatur gehalten und somit mit Sicherheit vermieden, daß der Taupunkt unterschritten wird. Bei dieser Arbeitsweise ist die vernichtbare Konzentration an Phosgen im zu behandelnden Abgas begrenzt durch die Sättigungskonzentration des Wasserdampfes im Abgas. Bei 20°C liegt die vernichtbare $COCl_2$-Konzentration bei etwa 2 Vol.-% und kann bei Steigerung der Temperatur entsprechend einer Steigerung der Wasserdampfsättigungskonzentration erhöht werden.

Die beschriebene Arbeitsweise hat den Vorteil, daß Wasserdampf und zu behandelndes Gas in sehr homogener Mischung vorliegen und eine Verteilung im Reaktionsraum nicht mehr erforderlich ist. Selbstverständlich ist es auch möglich, das zu behandelnde Gas und den Wasserdampf getrennt voneinander in den mit Aktivkohle beschickten Reaktionsraum einzudosieren. Diese Arbeitsweise ist wegen des erhöhten Aufwandes nur dann vorzuziehen, wenn der Phosgengehalt im zu behandelnden Abgas über 2 Vol.-% liegt.

Als Aktivkohlen lassen sich beliebige handelsübliche Sorten einsetzen mit inneren Oberflächen von z. B. 500–1800 m²/g. Um den Druckabfall im Reaktor möglichst gering zu halten, werden zweckmäßig gekörnte oder granulierte Aktivkohlen mit Siebgrenzen von 4 bis 8 mm eingesetzt, die als Form- oder Kornkohlen bezeichnet werden.

Die zu behandelnden Gase können mit Raumgeschwindigkeiten von etwa 500 bis 2500 Normalraumteilen Gasgemisch je Stunde je Raumteil Aktivkohle durch die Aktivkohleschüttung geleitet werden. Die Höhe der Schüttung bzw. die Raumgeschwindigkeit des Gases werden vorteilhaft so eingestellt, daß man Verweilzeiten von etwa 0,3 bis 25 Sekunden erzielt.

Das Verfahren kann bei Normaldruck oder auch bei Überdruck durchgeführt werden.

Zusammenfassend kann festgestellt werden, daß das erfindungsgemäße Verfahren schon bei niederen Temperaturen eine hohe Vernichtungsleistung für Phosgen zeigt, d. h. daß in dem die Aktivkohleschüttung verlassenden Gas Phosgen analytisch nicht mehr nachweisbar ist, wobei die Umsetzung in kleinen Apparaturen durchgeführt werden kann. Das erfindungsgemäße Verfahren läßt sich auf die Behandlung von allen Phosgen enthaltenden Abgasen anwenden, sofern diese keine Komponenten enthalten, die mit der Aktivkohle reagieren. Besonders geeignet ist es z. B. zur Behandlung von Abgasen, wie sie bei der Synthese von Aluminiumchlorid durch Umsetzung von Tonerde oder Bauxit mit Gemischen von Kohlenmonoxid und Chlor bzw. Phosgen anfallen. Die Aktivität der Aktivkohle fällt auch nach monatelangem Betrieb nicht merklich ab, d. h. daß eine Regeneration der Kohle nicht erforderlich ist.

Die behandelten Gase enthalten Chlorwasserstoffgas und $CO_2$. Ersteres kann in einfacher Weise zu Salzsäure aufgearbeitet und $CO_2$ in die Atmosphäre abgelassen werden.

Beispiel 1

A) In eine doppelwandige Kolonne mit einem inneren Durchmesser von 2 cm und einer Höhe von 30 cm, die mit einer 20 cm hohen Aktivkohleschüttung (innere Oberfläche 1580 m²/g, Porengröße 5–15 Å) versehen ist, werden stündlich 96 l einer aus 99,6 Vol.-% $CO_2$ und 0,4 Vol.-% $COCl_2$ bestehen-

den Gasmischung eingeleitet, entsprechend einer Raumgeschwindigkeit von ca. 1500 zw. einer Verweilzeit von 2,35 sec. Die 20°C warme Gasmischung wird vorher mit Wasserdampf gesättigt und passiert dann vor Eintritt in die Kolonne einen Tropfenabscheider. In der Aktivkohleschüttung wird eine Temperatur von 25°C eingehalten.

In dem die Kolonne verlassenden Abgas läßt sich auch nach 24stündigem Betrieb analytisch kein Phosgen mehr nachweisen.

B) In die unter A) beschriebene Kolonne wird unter gleichen Bedingungen das gleiche Gasgemisch eingeleitet, das jedoch nicht mit Wasserdampf gesättigt ist. Anstatt dessen werden in die Kolonne stündlich 1400 cm³ flüssiges Wasser im Gleichstrom mit dem Gas in feiner Verteilung eingedüst.

Bereits 1 Minute nach Einleitung des phosgenhaltigen Gemisches läßt sich in dem Abgas Phosgen analytisch nachweisen. Nach weiteren 4 Minuten steigt der Phosgengehalt im Gasstrom aus Kolonnenausgang auf über 100 Vol.ppm kontinuierlich an. Bei Erreichen dieses Wertes wird der Versuch abgebrochen.

## Beispiel 2

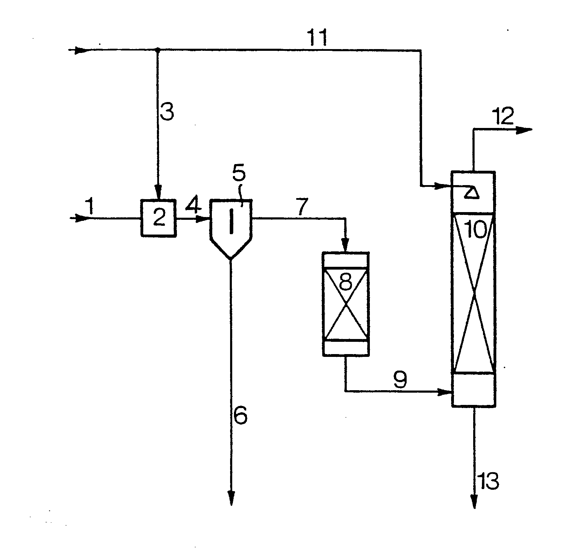

In der in Figur 1 schematisch veranschaulichten Phosgen-Vernichtungsanlage wird durch Leitung 1 stündlich ein Abgasstrom von 70 Nm³/h mit einem Phosgengehalt von 0,8 Vol.-% (Temperatur 20°C) und durch Leitung 3 in der gleichen Zeiteinheit 200 l Wasser einem Mischorgan 2 zugeführt. Das mit Wassertropfen beladene Abgas gelangt über Leitung 4 in den Tropfenabscheider 5. Hier werden die Wassertropfen vollständig abgeschieden und durch Leitung 6 abgezogen. Das mit Wasserdampf beladene aber wassertropfenfreie Abgas wird durch Leitung 7 der Kolonne 8 zugeführt.

Die Kolonne ist mit weitporiger, zylindrisch gekörnter Aktiv-Formkohle (Porendurchmesser 5 bis 15 Å) gefüllt. Der Durchmesser der Schüttung beträgt 300 mm und die Schütthöhe 1600 mm. Die Temperatur in der Schüttung beträgt 30°C. Die Raumgeschwindigkeit, bezogen auf 20°C und 760 mm Hg beträgt 660 und die Verweilzeit 5,7 Sekunden.

Das Abgas, in dem Phosgen nicht mehr nachweisbar ist, verläßt die Kolonne (8) zusammen mit den Hydrolyseprodukten HCl und $CO_2$ durch Leitung 9 und gelangt in die Kolonne 10. In dieser Kolonne wird durch Leitung 11 Wasser im oberen Teil eingedüst und im Gegenstrom zu dem Gas geführt. Hierbei wird das HCl ausgewaschen und durch Leitung 13 abgezogen. Das jetzt auch HCl-freie Abgas wird über Leitung 12 beispielsweise in einen Kamin abgegeben.

Auch nach 3monatigem Betrieb ist in dem die Kolonne 8 verlassenden Abgas kein Phosgen nachweisbar.

## Beispiel 3

Die in Beispiel 2 beschriebene Anlage wird wie dort mit dem Unterschied betrieben, daß die Kolonne mit einem geeigneten Material wärmeisoliert wird. Hierbei steigt die Temperatur in der Aktivkohleschüttung auf 45°C an. Die Schütthöhe der Schicht kann auf 900 mm reduziert werden, ohne daß Phosgen, selbst nach mehrmonatigem Betrieb in dem aus Leitung 9 austretenden Abgas nachweisbar ist.

## Patentansprüche

1. Verfahren zur Vernichtung von in Gasen enthaltenem Phosgen durch Hydrolyse in Gegenwart von Aktivkohle, dadurch gekennzeichnet, daß man die Hydrolyse des Phosgens in Abwesenheit von flüssigem Wasser mit dampfförmigem Wasser oberhalb des Taupunktes des Wassers durchführt.

2. Verfahren nach Anspruch 1, dadurch gekennzeichnet, daß die Hydrolyse bei Temperaturen von 10 bis 80°C durchgeführt wird.

3. Verfahren nach Anspruch 1 und 2, dadurch gekennzeichnet, daß man Aktivkohle mit einer inneren Oberfläche von 800 bis 1500 m²/g einsetzt.

## Claims

1. A process for destroying phosgene, contained in gases, by hydrolysis in the presence of active carbon, wherein the hydrolysis of the phosgene is carried out with water vapor, in the absence of liquid water, at above the dew point of water.

2. A process as claimed in claim 1, wherein the hydrolysis is carried out at from 10 to 80°C.

3. A process as claimed in claims 1 and 2, wherein active carbon having an inner surface area of from 800 to 1500 m²/g is employed.

## Revendications

1. Procédé pour détruire le phosgène contenu dans des gaz, par hydrolyse en présence de charbon actif, caractérisé par le fait que l'on effectue l'hydrolyse du phosgène en l'absence d'eau liquide, avec de l'eau sous forme de vapeur, au-dessus du point de rosée de l'eau.

2. Procédé selon la revendication 1, caractérisé par le fait que l'on effectue l'hydrolyse à des températures de 10 à 80°C.

3. Procédé selon l'une des revendications 1 ou 2, caractérisé par le fait que l'on utilise du charbon actif ayant une superficie interne de 800 à 1500 m²/g.